(19) Europäisches Patentamt
European Patent Office
Office européen des brevets

(11) Veröffentlichungsnummer: 0 000 930
B1

(12) **EUROPÄISCHE PATENTSCHRIFT**

(45) Veröffentlichungstag der Patentschrift: 01.07.81

(51) Int. Cl.³: C 07 F 9/38, C 11 D 3/36

(21) Anmeldenummer: 78100697.8

(22) Anmeldetag: 17.08.78

(54) N-Carboxyalkan-aminoalkan-diphosphonsäuren, N-Carboxyalkan-azacycloalkan-diphosphonsäuren und N-Carboxyalkan-aminoarylalkan-diphosphonsäuren, Verfahren zu ihrer Herstellung sowie ihre Verwendung als Komplexierungsmittel.

(30) Priorität: 18.08.77 DE 2737259

(43) Veröffentlichungstag der Anmeldung: 07.03.79 Patentblatt 79/5

(45) Bekanntmachung des Hinweises auf die Patenterteilung: 01.07.81 Patentblatt 81/26

(84) Benannte Vertragsstaaten: BE CH DE FR GB LU NL SE

(56) Entgegenhaltungen: DE - A - 2 318 416

(73) Patentinhaber: Benckiser-Knapsack GmbH
Dr. Albert-Reimann-Strasse 2
D-6802 Ladenburg (DE)

(72) Erfinder: Sommer, Klaus, Dr. Dipl.-Chem.
Sandwingert 39
D-6900 Heidelberg 1 (DE)
Erfinder: Rohlfs, Hans-Adolf, Dr. Dipl.-Chem.
Gutleuthofhang 14
D-6900 Heidelberg (DE)
Erfinder: Raab, Günter
Hurstweg 39
D-6941 Laudenbach (DE)

(74) Vertreter: Zellentin, Rüdiger, Dr. et al,
Zweibrückenstrasse 15
D-8000 München 2 (DE)

EP 0 000 930 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

N-Carboxyalkan-aminoalkan-diphosphonsäuren, N-Carboxyalkan-azacycloalkan-disphosphonsäuren und N-Carboxyalkan-aminoarylalkan-disphosphonsäuren, Verfahren zu ihrer Herstellung sowie ihre Verwendung als Komplexierungsmittel.

Gegenstand der vorliegenden Erfindung sind N-Carboxyalkan-aminoalkan-diphosphonsäuren, N-Carboxyalkan-azacyloalkan-diphosphonsäuren und N-Carboxyalkan-aminoarylalkan-diphosphonsäuren, sowie ein Verfahren zu ihrer Herstellung.

Aus der DT—PS 23 18 416 sind N-Carboxymethyl-aminoalkan-diphosphonsäuren und N-Carboxymethyl-aminoarylalkan-diphosphonsäuren bekannt, die man durch die Umsetzung von Aminoalkan- oder Aminoarylalkan-diphosphonsäuren im alkalischen Medium mit Formaldehyd und Alkalicyanid unter Erhitzen auf 70—150°C erhält.

Diesem Verfahren haftet der Nachteil an, daß sehr große Vorsicht beim Arbeiten mit Alkalicyaniden, insbesondere im technischen Maßstab, geboten ist und daher umfangreiche Sicherheitsvorkehrungen unerläßlich sind.

Überraschenderweise wurde nun gefunden, daß man sowohl die aus der deutschen Patentschrift 23 18 416 bekannten Verbindungen als auch neue N-Carboxyalkan-aminoalkan-diphosphonsäuren, N-Carboxyalkan-azacycloalkan-diphosphonsäuren und N-Carboxyalkan-aminoarylalkan-diphosphonsäuren unter günstigeren Arbeitsbedingungen herstellen kann, wenn man Aminoalkan-, Azacycloalkan- oder Aminoarylalkan-diphosphonsäuren der allgemeinen Formel II

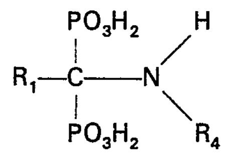

In der $R_1$ ein Wasserstoffatom, oder ein Alkylrest der Formel $-(CH_2)_xCH_3$ mit $x = 0$ bis 10, oder ein niedriger Hydroxyalkylrest, oder ein niedriger Carboxyalkylrest, oder ein Arylrest, oder ein N,N-Bis-(carboxyalkyl)-aminoalkylrest, oder ein niedriger Alkylphosphonsäurerest, oder $R_1$ zusammen mit dem Substituenten $R_2$ eine Alkylengruppe mit 3 bis 5 C-Atomen ist und einen Azacycloalkanring bildet und $R_4$ ein Wasserstoffatom, oder ein niedriger Alkylrest oder $R_4$ zusammen mit dem Substituenten $R_1$ eine Alkylengruppe mit 3 bis 5 C-Atomen ist und einen Azacyloalkanring mit der Gruppierung

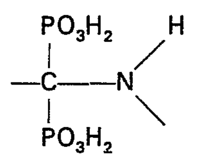

bildet, mit gerad- oder verzweigt-kettigen Halogenalkanmonocarbonsäuren mit 2 bis 12 Kohlenstoff-Atomen oder mit Halogenalkandicarbonsäuren bzw. deren Alkalisalzen oder Estern bei Temperaturen von 50—160°C im Molverhältnis von 1:1 bis 1:3 in wäßrigem Medium umsetzt.

Man erhält auf diese Weise Verbindungen der allgemeinen Formel I

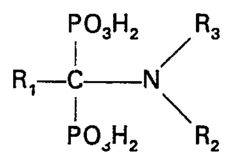

in der $R_1$ wie vorstehend bei Formel II definiert ist, während $R_2$ ein Wasserstoffatom, oder ein niedriger Alkylrest, oder der gleiche Rest wie $R_3$, oder $R_2$ zusammen mit dem Substituenten $R_1$ eine Alkylengruppe mit 3 bis 5 C-Atomen ist und einen Azacycloalkanring mit der Gruppierung

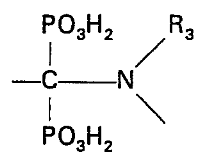

bildet, und $R_3$ ein carboxylsubstituierter unverzweigter oder verzweigter Alkylrest, oder ein dicarboxylsubstituierter Alkylrest ist.

Neue Verbindungen dieser Art sind N-Carboxymethan-azacycloheptan-2,2-diphosphonsäure, N-Carboxypentan-1-aminoäthan-1,1-diphosphonsäure, N-Carboxyäthan-1-aminoäthan-1,1-diphosphonsäure, N-Carboxy-2,2-dimethylpropan-aminomethan-diphosphonsäure, N-10-Carboxydekanamino-

methan-diphosphonsäure, N,N-Bis-10-Carboxydekan-aminomethan-diphosphonsäure sowie N-(1,1-Diphosphonoprop-1-yl)-DL-aminobernsteinsäure.

Geeignete Verbindungen zur Carboxylierung der Aminoalkan-, Aminoarylalkan- oder Azacycloalkan-diphosphonsäuren sind beispielsweise die Monochlor- oder Bromessigsäure, die 6-Bromhexansäure, die 3-Chlorpropionsäure, die 3-Chlor-2,2-dimethylpropionsäure (ß-Chlorpivalinsäure), die 11-Bromundekansäure, sowie als Dicarbonsäure die Brombernsteinsäure.

Zur Herstellung der erfindungsgemäßen Substanzen ist es möglich, die Aminodiphosphonsäure im Überschuß vorgelegter Alkalilauge zu lösen und anschließend die Halogencarbonsäure so einzutragen, daß ein pH-Wert von 4 nicht unterschritten wird. Wesentlich eleganter läßt sich das Verfahren durchführen, wenn man nur so viel Alkalilauge vorlegt, wie für den gewünschten pH-Wert zwischen 4 und 12, vorzugsweise 7 und 9, erforderlich ist. Die weitere Dosierung von Alkalilauge und Halogencarbonsäure wird dann pH-abhängig gesteuert.

In manchen Fällen suspendiert man vorteilhafterweise die Diphosphonsäure und Halogencarbonsäure in Wasser und neutralisiert ganz oder partiell mit Alkalihydroxyd. Die Reaktionszeit und Temperatur liegen unter Ausnutzung der Neutralisationswärme bei 0,5 bis 3 Stunden und bei 50—160°C, vorteilhaft bei 60 bis 110°C.

Auf diese Weise erhält man als Reaktionsprodukte ganz- oder teilneutralisierte Salze, die mittels Kationenaustauscher in die freien Säuren überführt werden können.

Es ist auch ohne weiteres möglich, anstelle von Alkalihydroxyd, z.B. Alkalicarbonat oder für spezielle Anwendungszwecke Alkali- und Erdalkalihydroxyde gemeinsam, z.B. Natrium- oder Calciumhydroxyd oder Alkali-schwermetall-hydroxyde, z.B. Natriumaluminat, Natriumzinkat oder Natriumstannat zu verwenden.

So hergestellte Produkte sind insbesondere für Korrosionsschutzmittel und für Produkte in der Aufbereitung von Gebrauchswässern geeignet.

Je nach den Eigenschaften oder dem gewünschten Anwendungszweck werden die Lösungen direkt verwandt, die Salze kristallisiert oder nach Ionenaustausch die Säure nach an sich bekannten Verfahren, wie Verdampfungskonzentration oder Fällung bzw. Extraktion mit organischen Lösungsmitteln, gewonnen.

Bei der Carboxylierung erhält man in Abhängigkeit von den eingesetzten Molverhältnissen und der angewandten Aminodiphosphonsäure einfach oder mehrfach carboxyalkylierte Produkte. Bei einem Molverhältnis der Reaktionspartner von 1:1 werden bevorzugt N-Carboxyalkan-aminoalkan-diphosphonsäuren erhalten. Ein Molverhältnis der Reaktionspartner von Aminodiphosphonsäure : Halogencarbonsäure von 1:2 bis 1:3 ergibt bevorzugt N,N-Bis-carboxyalkanaminoalkan-diphosphonsäuren.

Die nach der vorliegenden Erfindung erhaltenen Substanzen können überall da eingesetzt werden, wo ein gutes Komplexbindevermögen gegenüber 2- und mehrwertigen Metall-Ionen erforderlich ist. Sie zeichnen sich noch besonders durch ihre Hydrolysebeständigkeit bei hohen Temperaturen aus. Sie können in allen Medien Verwendung finden, in denen die Härtebildner des Wassers stören oder in denen jegliche Einflüsse von mehrwertigen Metall-Ionen ausgeschaltet werden sollen. Im einzelnen sind hier die Aufbereitung von hartem Wasser, Textilbehandlungsbäder, die Papierherstellung, photographische Entwicklungsbäder, Galvanisierbäder und die Gerbung zu nennen. Des weiteren eignen sich diese Diphosphonsäuren zur Stabilisierung der Wasserhärte in unterstöchiometrischen Mengen. Auch können sie als Stabilisatoren für Dispersionen und Suspensionen dienen.

Da die erfindungsgemäßen Produkte die Eigenschaften von Phosphonsäuren und Aminocarbonsäuren aufweisen, bieten sie anwendungstechnisch Vorteile gegenüber den Phosphonsäuren bzw. den Aminocarbonsäuren allein, die über die Summe der Eigenschaften der einzelnen Komponenten hinausgeht.

Beispiel 1:

In einem Rührbehälter mit Thermometer und Rückflußkühler werden 6,72 kg 50%ige Kalilauge vorgelegt und 2,05 kg 1-Aminoäthan-1,1-diphosphonsäure so zugegeben, daß die Sumpftemperatur 60°C nicht übersteigt. Innerhalb einer Stunde tropft man dann eine Lösung von 1,89 kg Monochloressigsäure in 2,2 kg Wasser zu und erhitzt anschließend drei Stunden auf 100°C.

Nach Entsalzen eines aliquoten Teils des Reaktionsproduktes mittels eines stark sauren Kationenaustauschers und Einengen der Lösung konnte die N,N-Bis-carboxymethan-1-aminoäthan-1,1-diphosphonsäure durch Auskristallisieren mit Methanol/Äthanol in einer Ausbeute von 91,3% der Theorie gewonnen werden.

Das Produkt zeigt folgende Analyse:

| | | | |
|---|---|---|---|
| ber.: | C: 22,40%, | N: 4,36%, | P: 19,29% |
| gef.: | C: 22,6%, | N: 4,4%, | P: 19,3%. |

Molverh.: C : P : N = 5,99 : 1,98 : 1.

Beispiel 2:

28 g Kaliumhydroxyd werden in 100 ml Wasser gelöst und 20,5 g 1-Aminoäthan-1,1-

diphosphonsäure eingetragen. Anschließend gibt man 13,9 g Bromessigsäure zu und kocht drei Stunden am Rückfluß.

Das Reaktionsprodukt wird mit einem sauren Austauscher (Lewatit S 100) behandelt und die Lösung eingeengt. Es resultiert ein hell-gelbes, viskoses öl, das mit Methanol/Äthanol zur Kristallisation gebracht wird. Man erhält nach Trocknen im Wasserstrahl-Vakuum bei 80°C 25,4 g N-Carboxymethan-1-aminoäthan-1,1-diphosphonsäure, was einer Ausbeute von 96,6% der Theorie entspricht.

| | | | | |
|---|---|---|---|---|
| Analyse: | ber.: | C: 18,26%, | N: 5,32%, | P: 23,55% |
| | gef.: | C: 17,6%, | N: 5,2%, | P: 23,3%. |
| | Molverh.: C : P : N = 3,95 : 2,02 : 1. | | | |

Beispiel 3:

47,8 g Aminomethan-diphosphonsäure werden in 148 g 50%iger Kalilauge bei 60°C gelöst und eine Lösung von 99,4 g Kaliumsalz der Monochloressigsäure in 250 ml Wasser zugegeben. Anschließend wird drei Stunden auf 80—90°C erhitzt.

Nach Aufarbeiten der Reaktionslösung, wie im vorhergehenden Beispiel beschrieben, erhält man 75,2 g der N,N-Bis-carboxymethan-aminomethan-diphosphonsäure.

| | | | | |
|---|---|---|---|---|
| Analyse: | ber.: | C: 19,56%, | N: 4,56%, | P: 20,17% |
| | gef.: | C: 20,3%, | N: 4,7%, | P: 20,3%. |
| | Molverh.: C : P : N = 5,04 : 1,95 : 1. | | | |

Beispiel 4:

95,5 g Aminomethan-diphosphonsäure werden in 224 g 50%iger Kalilauge bei 60°C gelöst, 300 ml Wasser und 54,3 g Chloressigsäuremethylester zugegeben. Nach 3-stündigem Kochen am Rückfluß läßt man erkalten.

Nach Aufarbeiten der Lösung mit einem sauren Austauscher, Einengen, Kristallisieren und Trocknen erhält man 115 g N-Carboxymethan-aminomethan-diphosphonsäure, was einer Ausbeute von 92,3% der Theorie entspricht.

| | | | | |
|---|---|---|---|---|
| Analyse: | ber.: | C: 14,47%, | N: 5,62%, | P: 24,87% |
| | gef.: | C: 15,1%, | N: 5,7%, | P: 25,0%. |
| | Molverh. C : P:N = 3,09 : 1,98 : 1. | | | |

Beispiel 5:

13,4 g Phenylaminomethan-diphosphonsäure werden in einer Lösung von 8 g NaOH in 100 ml Wasser gelöst, so daß die Temperatur 60°C nicht übersteigt und dann 4,8 g Monochloressigsäure zugegeben. Man hält die Reaktionslösung anschliessend drei Stunden bei 110°C, läßt erkalten und behandelt mit einem stark sauren Austauscher.

Aus der eingeengten Lösung werden mit Methanol 15 g kristalline N-Carboxymethan-phenylaminomethan-diphosphonsäure erhälten.

| | | | | |
|---|---|---|---|---|
| Analyse: | ber.: | C: 33,23%, | N: 4,31%, | P: 19,05% |
| | gef.: | C: 32,8%, | N: 4,3%, | P: 18,6%. |
| | Molverh.: C : P : N = 8,9 : 1,95 : 1. | | | |

Beispiel 6:

In 200 ml Wasser werden 54,8 g 1-Aminopropan-1,1-diphosphonsäure engerührt und langsam 14,6 g basisches Zinkcarbonat zugegeben. Nach Beendigung der Gasentwicklung wird mit 140 g 50%iger Kalilauge versetzt und nach dem Abkühlen auf 50°C 47,3 g Monochloressigsäure portionsweise eingetragen.

Nach zwei Stunden Kochen am Rückfluß erhält man eine klare, schwach gelb gefärbte Lösung des Kaliumzinksalzes der N,N-Bis-carboxymethan-1-aminopropan-1,1-diphosphonsäure. Dünnschichtchromatographische Untersuchungen zeigen einen Mindest-Umsatz von 90% der Theorie. Ein Teil der Lösung wird, wie in den vorhergehenden Beispielen beschrieben, aufgearbeitet.

| | | | | |
|---|---|---|---|---|
| Analyse: | ber.: | C: 25,09%, | N: 4,18%, | P: 18,48% |
| | gef.: | C: 24,5%, | N: 4,2%, | P: 18,2%. |
| | Molverh.: C : P : N = 6,81 : 1,96 : 1. | | | |

Beispiel 7:

In 250 ml destilliertem Wasser werden 90 g Kaliumhydroxid gelöst und in diese Lösung 103,6 g Aza-cycloheptan-2,2-diphosphonsäure so eingetragen, daß die Temperatur 60°C nicht übersteigt. Nach Zugabe von 38 g Monochloressigsäure wird 2 1/2 Stunden auf 110°C erhitzt. Man läßt abkühlen

und gewinnt anschließend nach beschriebener Methode gemäß Beispiel 1 aus der Lösung 102,5 g N-Carboxymethan-aza-cycloheptan-2,2-diphosphonsäure.

| | | | | |
|---|---|---|---|---|
| Analyse: | ber.: | C: 30,49%, | N: 4,44%, | P: 19,66% |
| | gef.: | C: 30,0%, | N: 4,5%, | P: 20.0%. |
| | Molverh.: C : N : P = 7,8 : 1 : 2. | | | |

Beispiel 8:

41 g 1-Aminoäthan-1,1-diphosphonsäure werden unter Rühren in 187 g 30%iger Kalilauge gelöst und bei 60°C 39 g 6-Bromhexansäure zugegeben. Zur Vervollständigung der Reaktion wird langsam auf 100°C aufgeheizt und drei Stunden bei dieser Temperatur belassen. Nach der Aufarbeitung gemäß Beispiel 1 erhält man N-Carboxypentan-1-aminoäthan-1,1-diphosphonsäure.

Durch Bestimmung der freien Amino-Gruppen nach der Methode von Van Slyke wurde ein Umsatz von 73,4% der Theorie ermittelt.

Beispiel 9:

In eine Mischung aus 51 g 1-Aminoäthan-1,1-diphosphonsäure, 27,2 g 3-Chlorpropionsäure und 150 ml Wasser werden unter Rühren bei 70°C innerhalb einer Stunde 140 g 50%ige Kalilauge eingetropft und anschließend dei klare Lösung zwei Stunden am Rückfluß gekocht.

Nach Aufarbeitung der Lösung erhält man 57,5 g N-Carboxyäthan-1-aminoäthan-1,1-diphosphonsäure.

| | | | | |
|---|---|---|---|---|
| Analyse: | ber.: | C: 21,67%, | N: 5,05%, | P: 22,35% |
| | gef.: | C: 20,5%, | N: 4,8%, | P: 21,3%. |
| | Molverh.: C : N : P = 4,98 : 1 : 2. | | | |

Beispiel 10:

Zu einer Lösung von 47,8 g Aminomethan-diphosphonsäure in 288 g 30%iger Kalilauge werden unter Rühren 34,6 g 3-Chlor-2,2-dimethylpropionsäure (β-Chlorpivalinsäure) zugegeben. Die Lösung wird innerhalb einer Stunde zum Sieden aufgeheizt und zwei Stunden bei dieser Temperatur gehalten. Nach der Aufarbeitung wurde N-2-Carboxy-2,2-dimethyläthan-aminomethan-diphosphonsäure erhalten.

Es konnte durch Bestimmung der primären Amino-Gruppen in der Lösung ein Umsatz von 73,5% der Theorie ermittelt werden.

Beispiel 11:

54,7 g 1-Aminopropan-1,1-diphosphonsäure werden in 150 g 40%iger Natronlauge gelöst und bei 60°C 49,5 DL-Brombernsteinsäure eingetragen. Zur Vervollständigung der Reaktion wird noch zwei Stunden am Rückfluß gekocht.

In der Lösung konnten durch quantitative Dünnschichtchromatographie 21 g 1-Aminopropan-1,1-diphosphonsäure und 51,4 g N-(1,1-Diphosphonoprop-1-yl)-DL-aminobernsteinsäure nachgeweisen werden.

Beispiel 12:

In 150 g 50%iger Kalilauge werden 47,8 g Aminomethan-diphosphonsäure gelöst und in diese Lösung bei 80°C 88,8 g 11-Bromundekansäure eingetragen. Nach 2-stündigem Kochen am Rückfluß und Abkühlen der Lösung konnten durch dünnschichtchromatographische Untersuchungen ca. 30% Aminomethan-diphosphonsäure, ca. 60% N-10-Carboxydekan-aminomethan-diphosphonsäure und ca. 10% N,N-Bis-10-Carboxydekan-aminomethan-diphosphonsäure nachgewiesen werden.

Beispiel 13:

In einem 1 $m^3$-Rührwerksbehälter mit Rückflußkühler, Heizung, eingebauter pH-Einstabmeßkette und zwei Tropftrichtern werden in 292,2 kg Wasser und 69,8 kg 50%iger Kalilauge 127,7 kg 1-Aminoäthan-1,1-diphosphonsäure gelöst. Die Lösung wird unter Ausnutzung der Neutralisationswärme auf 80°C erwärmt und aus den beiden Vorlagen 147,7 kg 80%iger Monochloressigsäure-Lösung und ca. 362 kg 50%iger Kalilauge zudosiert. Die Zugabe wird so gesteuert, daß der pH-Wert im Reaktionsmedium zwischen 8,0 und 8,5 liegt. Durch die entstehende Reaktionswärme kann die Reaktionsmischung auf 80 bis 90°C gehalten werden. Nach Beendigung des Zulaufes wird mit Kalilauge auf einen pH-Wert von 8,5 eingestellt und die Lösung noch eine Stunde bei 90—100°C gerührt.

Die resultierende Lösung hat einen Gehalt von ca. 20% N,N-Bis-carboxymethylen-1-aminoäthan-1,1-diphosphonsäure.

Beispiel 14:

58,7 g 3-Hydroxy-1-aminopropan-1,1-diphosphonsäure werden in eine Lösung von 84 g KOH in 300 ml Wasser eingetragen. Die Lösung wird auf 60°C erhitzt und unter kräftigem Rühren werden 56 g

3-Chlorpropionsäure so eingetragen, daß die Temperatur langsam auf 80°C ansteigt. Nach 3-stündigem Kochen unter Rückfluß resultiert eine schwach gelb gefärbte Lösung.

Nach Aufarbeitung der Lösung mittels eines stark sauren Ionenaustauschers, Einengen, Kristallisieren und Trocknen erhält man 81 g leicht gelbliche hygroskopische Kristalle. Die dünnschichtchromatographische Analyse zeigt einen Gehalt von ca. 20% N-Carboxyäthan-3-hydroxy-1-aminopropan-1,1-diphosphonsäure und ca. 80% N,N-Bis-carboxyäthan-3-hydroxy-1-aminopropan-1,1-diphosphonsäure.

Beispiel 15:

24,9 g 2-Carboxy-1-aminoäthan-1,1-diphosphonsäure werden bei 50°C unter Rühren in 119 ml 30%iger Kalilauge gelöst und bei dieser Temperatur 19 g 5-Bromvaleriansäure eingetragen. Man kocht 3 1/2 Stunden am Rückfluß, kühlt ab, behandelt die Lösung mit einem Kationenaustauscher, engt die Säurelösung fast bis zur Trockne ein und kristallisiert mit Gemischen aus Methanol, Äthanol und Aceton fraktioniert. Die Ausbeute an 2-Carboxy-1,1-diphosphono-äthan-1-aminopentansäure beträgt 24,5 g.

| | | | | |
|---|---|---|---|---|
| Analyse: | ber.: | C: 27,52%, | N: 4,01%, | P: 17,74% |
| | gef.: | C: 27,5%, | N: 3,9%, | P: 17,8%. |
| | Molverh.: C : P : N = 8,23 : 2,06 : 1. | | | |

Beispiel 16:

6,9 g 1-Aminododekan-1,1-diphosphonsäure werden in 56 g 10%iger Kalilauge gelöst, bei 60°C 2,8 g 3-Chlor-2,2-dimethylpropionsäure zugegeben und drei Stunden unter Rückfluß gekocht. Nach Aufarbeiten der Reaktionslösung mittels eines sauren Kationenaustauschers, Filtrieren und Einengen der Säurelösung erhält man durch Kristallisieren mit Methanol/Wasser 6 g N-2-Carboxy-2,2-dimethyläthan-1-aminododekan-1,1-diphosphonsäure.

| | | | | |
|---|---|---|---|---|
| Analyse: | ber.: | C: 45,84%, | N: 3,14%, | P: 13,91% |
| | gef.: | C: 47,8%, | N: 3,2%, | P: 14,4%. |
| | Molverh.: C : P : N = 17,43 : 2,03 : 1. | | | |

**Patentansprüche**

1. Verfahren zur Herstellung von N-Carboxyalkan-aminoalkandiphosphonsäuren, N-Carboxyalkan-azacycloalkandiphosphonsäuren und N-Carboxyalkan-aminoaryl-diphosphonsäuren der allgemeinen Formel I

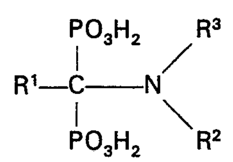

in der

$R^1$ ein Wasserstoffatom, oder ein Alkylrest der Formel $—(CH_2)_xCH_3$ mit $x = 0$ bis 10, oder ein Hydroxyäthylrest, oder ein Carboxymethylrest, oder ein Phenylrest, oder ein N,N-Bis-(carboxyalkyl)-aminoalkylrest, oder ein Methyl- oder Äthylphosphonsäurerest, oder $R^1$ zusammen mit $R^2$ eine Alkylengruppe mit 3 bis 5 C-Atomen ist und einen Azacycloalkanring mit der Gruppierung

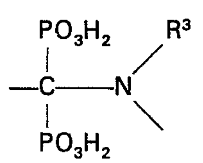

bildet, $R^2$ ein Wasserstoffatom, oder ein Methylrest, oder der gleiche Rest wie $R^3$, oder $R^2$ zusammen mit $R^1$ eine Alkylengruppe mit 3 bis 5 C-Atomen ist und einen Azacycloalkanring mit der Gruppierung

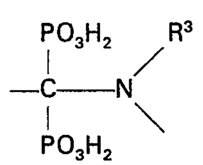

bildet, und $R^3$ ein carboxysubstituierter unverzweigter Alkylrest mit der Formel $(CH_2)_mCOOH$, in der m =

1 bis 12 ist, oder ein 2-Carboxy-2,2-dimethyläthylrest, oder ein 1,2-Dicarboxy-äthylrest ist, dadurch gekennzeichnet, daß eine Aminoalkan-, Azacycloalkan- oder Aminoarylalkan-diphosphonsäure der allgemeinen Formel II

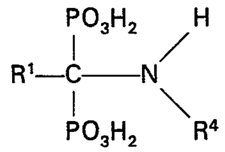

in der $R^1$ wie bei Formel I angegeben definiert ist, und $R^4$ ein Wasserstoffatom, oder ein Methylrest, oder $R^4$ zusammen mit $R^1$ eine Alkylengruppe mit 3 bis 5 C-Atomen ist und einem Azacycloalkanring mit der Gruppierung

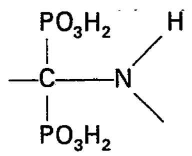

bildet, mit einer entsprechenden unverzweigten oder verzweigten Halogenalkancarbonsäure oder Halogenbernsteinsäure, ihren Alkalisalzen, Erdalkalisalzen oder Alkali-schwermetall-salzen oder ihren Estern in einem Molverhältnis von 1:1 bis zu 1:3 in wäßrigem Medium bei einer Temperatur zwischen 50 und 160°C und bei einem pH-Wert zwischen 4,0 und 12,0 solange erhitzt, bis die Umsetzung abgeschlossen ist.

2. Verfahren nach Anspruch 1, dadurch gekennzeichnet, daß der pH-Wert während der Reaktion zwischen 7,0 und 9,0 gehalten wird.

3. Verfahren nach Anspruch 1. dadurch gekennzeichnet, daß die Reaktion in einem Temperaturbereich von 60 bis 110°C durchgeführt wird.

4. Eine N-Carboxyalkan-aminoalkan-diphosphonsäure der allgemeinen Formel I

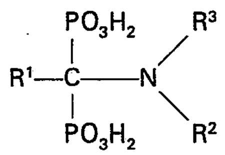

in der die Reste $R^1$ und $R^2$ wie in Anspruch 1 definiert sind und $R^3$ ein carboxysubstituierter unverzweigter Alkylrest mit der Formel $(CH_2)_mCOOH$, in der $m = 2$ bis 12 ist, ein carboxysubstituierter verzweigter Alkylrest, oder ein dicarboxysubstituierter Alkylrest ist, dadurch gekennzeichnet, daß sie nach einen Verfahren nach einem der Ansprüche 1 bis 3 hergestellt ist.

5. Verbindung nach Anspruch 4, in der $R_1$ zusammen mit $R_2$ eine Alkylengruppe mit 5 C-Atomen ist und einen Azacycloheptanring mit der Gruppierung

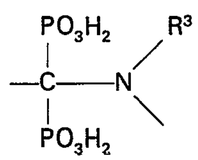

bildet, $R_3$ eine Carboxymethylgruppe ist und die Verbindung somit N-Carboxymethan-azacycloheptan-2,2-diphosphonsäure ist.

6. Verbindung nach Anspruch 4, in der $R_1$ ein Methylrest ist, $R_2$ ein Wasserstoffatom ist, $R_3$ ein Carboxypentylrest ist und die Verbindung somit N-Carboxypentan-1-aminoäthan-1,1-diphosphonsäure ist.

7. Verbindung nach Anspruch 4, in der $R_1$ ein Wasserstoffatom ist, $R_2$ ein Wasserstoffatom ist, $R_3$ ein 2-Carboxy-2,2-dimethyläthylrest ist und die Verbindung somit N-(2-Carboxy-2,2-dimethyläthan)-aminomethan-diphosphonsäure ist.

8. Verbindung nach Anspruch 4, in der $R_1$ ein Äthylrest ist, $R_2$ ein Wasserstoffatom ist, $R_3$ eine Gruppe mit der Formel

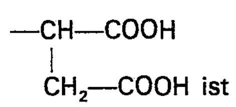 ist

und die Verbindung somit N-(1,1-Diphosphonoprop-1-yl)-D,L-aminobernsteinsäure ist.

9. Verbindung nach Anspruch 4, in der $R_1$ ein Wasserstoffatom ist, $R_2$ und $R_3$ 10-Carboxydecylgruppen sind und die Verbindung somit N,N-Bis-(10-carboxydekan)-aminomethan-disphosphonsäure ist.

10. Verbindung nach Anspruch 4, in der $R_1$ eine Carboxymethylgruppe ist, $R_2$ ein Wasserstoffatom ist, $R_3$ ein Pentancarbonsäurest ist und die Verbindung somit 2-Carboxy-1,1-diphosphonoäthan-1-aminopentancarbonsäure ist.

11. Verbindung nach Anspruch 4, in der $R_1$ ein Undecylrest ist, $R_2$ ein Wasserstoffatom ist, $R_3$ eine 2-Carboxy-2,2-dimethyläthylgruppe ist und die Verbindung somit N-(2-Carboxy-2,2-dimethyläthan)-1-aminododekan-1,1-diphosphonsäure ist.

12. Verbindung nach Anspruch 4, in der $R_1$ ein Hydroxyäthylrest ist, $R_2$ eine Carboxyäthylgruppe ist, $R_3$ ebenfalls eine Carboxyäthylgruppe ist und die Verbindung somit N,N-Bis-(carboxyäthan)-3-hydroxy-1-aminopropan-1,1-diphosphonsäure ist.

13. Verwendung der Verbindungen nach Anspruch 4 in stöchiometrischen oder unterstöchiometrischen Mengen zur Behandlung wäßriger Systeme.

## Claims

1. Process for the production of N-carboxyalkane-aminoalkane diphosphonic acids, N-carboxyalkane-azacycloalkane-diphosphonic acids and N-carboxyalkane-aminoaryl-diphosphonic acids of the general Formula I

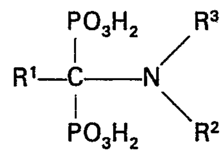

wherein $R^1$ is a hydrogen atom, or an alkyl radical of formula $-(CH_2)_xCH_3$ with $x = 0$ to 10, or a hydroxy ethyl radical, or a carboxy methyl radical, or a phenyl radical, or an N,N-bis-(carboxyalkyl)-aminoalkyl radical, or a methyl- or ethyl-phosphonic acid radical, or $R^1$ together with $R^2$ is an alkylene group with 3 to 5 C-atoms and forms an azacycloalkane ring with the grouping

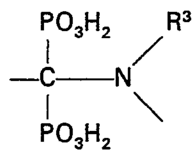

$R^2$ is a hydrogen atom, or a methyl radical, or the same radical as $R^3$, or $R^2$ together with $R^1$ is an alkylene group with 3 to 5 C-atoms and forms an azacycloalkane ring with the grouping

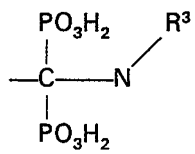

$R^3$ is a carboxy-substituted unbranched alkyl radical with the formula $(CH_2)_mCOOH$ in which $m = 1$ to 12, or a 2-carboxy-2,2-dimethyl ethyl radical, or a 1,2-dicarboxy-ethyl radical, characterised in that an amino alkane, azacyclo alkane or aminoaryl alkane diphosphonic acid of the general Formula II

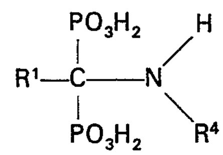

wherein $R^1$ is defined as stated in Formula I and $R^4$ is a hydrogen atom, or a methyl radical, or $R^4$ together with $R^1$ is an alkylene group with 3 to 5 C-atoms and forms an azacyclo alkane ring with the grouping

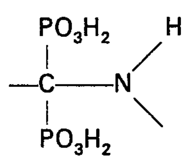

is heated with a corresponding unbranched or branched halogen alkane carboxylic acid or halogen succinic acid, its alkali salts, earth alkali salts or alkali-heavy metal salts or its esters in a molar ratio of 1:1 to 1:3 in aqueous medium at a temperature between 50 and 160°C and at a pH value between 4.0 and 12.0 until the reaction is concluded.

2. Process according to Claim 1, characterised in that the pH value is kept between 7.0 and 9.0 during the reaction.

3. Process according to Claim 1, characterised in that the reaction is carried out in a temperature range of 60 to 110°C.

4. An N-carboxyalkane-aminoalkane-diphosphonic acid of the general Formula I

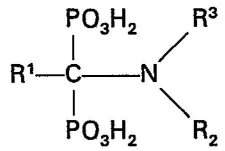

in which the radicals $R^1$ and $R^2$ are as defined in Claim 1 and $R^3$ is a carboxy-substituted unbranched alkyl radical with the formula $(CH_2)_mCOOH$ in which m = 2 to 12, a carboxy-substituted branched alkyl radical or a dicarboxy-substituted alkyl radical, characterised in that it is produced by a process according to one of Claims 1 to 3.

5. Compound according to Claim 4, wherein $R^1$ together with $R^2$ is an alkylene group with 5 C-atoms and forms an azacycloheptane ring with the grouping

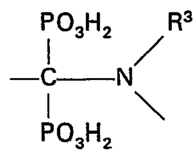

$R^3$ is a carboxy methyl group and thus the compound is N-carboxymethane-azacycloheptane-2,2-diphosphonic acid.

6. Compound according to Claim 4, wherein $R^1$ is a methyl radical, $R^2$ is a hydrogen atom, $R^3$ is a carboxy pentyl radical and thus the compound is N-carboxypentane-1-amino-ethane-1,1-diphosphonic acid.

7. Compound according to Claim 4, wherein $R^1$ is a hydrogen atom, $R^2$ is a hydrogen atom, $R^3$ is a 2-carboxy-2,2-dimethyl ethyl radical and thus the compound is N-(2-carboxy-2,2-dimethyl ethane)-aminomethane-diphosphonic acid.

8. Compound according to Claim 4, wherein $R^1$ is an ethyl radical, $R^2$ is a hydrogen atom, $R^3$ is a group with the formula

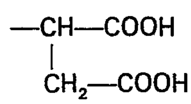

and thus the compound is N-(1,1-diphosphonoprop-1-yl)-D,L-amino-succinic acid.

9. Compound according to Claim 4, wherein $R^1$ is a hydrogen atom, $R^2$ and $R^3$ are carboxydecyl groups and thus the compound is N,N-bis-(10-carboxydecane)-aminomethane-diphosphonic acid.

10. Compound according to Claim 4, wherein $R^1$ is a carboxy methyl group, $R^2$ is a hydrogen atom, $R^3$ is a pentane carboxylic acid radical and thus the compound is 2-carboxy-1,1-diphosphono-ethane-1-aminopentane carboxylic acid.

11. Compound according to Claim 4, wherein $R^1$ is an undecyl radical, $R^2$ is a hydrogen atom, $R^3$ is a 2-carboxy-2,2-dimethyl ethyl group and thus the compound is N-(2-carboxy-2,2-dimethyl ethane)-1-aminododecane-1,1-diphosphonic acid.

12. Compound according to Claim 4, wherein $R^1$ is a hydroxyethyl radical, $R^2$ is a carboxyethyl group, $R^3$ is likewise a carboxyethyl group and thus the compound is N,N-bis-(carboxyethane)-3-hydroxy-1-aminopropane-1,1-diphosphonic acid.

13. Use of the compounds according to Claim 4 in stoichiometric or sub-stoichiometric quantities for the treatment of aqueous systems.

## Revendications

1. Procédé de préparation d'acides N-carboxyalcane-aminoalcane-diphosphoniques, N-carboxyalcane-azocycloalcanes-diphosphonique et N-carboxyalcane-aminoaryle diphosphoniques ayant pour formule générale

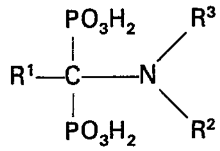

ou $R_1$ désigne un atome d'hydrogène ou un radical alcoyle de formule $—(CH_2)_xCH_3$ avec x compris entre 0 et 10 ou un radical hydroxyéthyle ou un radical carboxyméthyle ou un radical phényle ou un radical N,Nbis-(carboxyalcoyle)-aminoalcoyle ou un radical phosphonate de méthyle ou d'éthyle, ou $R_1$ étant associé à $R_2$ constitue un groupe alcoyle contenant 3 à 5 atomes de carbone et forme un noyau azacycloalcane avec le groupement

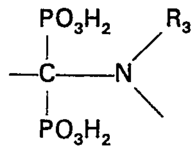

tandis que $R_2$ désigne un atome d'hydrogène ou un radical méthyle ou le même radical que $R_3$ ou $R_2$ étant associé à $R_1$ constitue un groupe alcoylène contenant 3 à 5 atomes de carbone et forme un noyau azacycloalcane avec le groupement

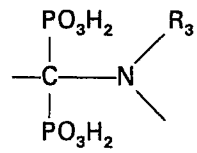

et où $R_3$ désigne un radical alcoyle non ramifié avec substitution carboxylée ayant pour formule $(CH_2)_mCOOH$ avec m compris entre 1 et 12 ou un radical 2-carboxy-2,2-diméthyléthyle ou un radical 1,2-dicarboxyéthyle.
ce procédé étant caractérisé par le fait que l'on part d'un acide aminoalcane-diphosphonique azacycloalcane-diphosphonique ou aminoarylalcane-diphosphonique dont la formule générale est

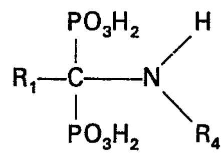

où $R_1$ est défini comme pour la formule 1 et $R_4$ est un atome d'hydrogène ou un radical méthyle ou constitue avec $R_1$ un groupe alcoylène contenant 3 à 5 atomes de carbone et forme un noyau azacycloalcane avec le groupement

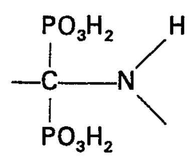

et que l'on chauffe un tel acide avec un acide alcane-carboxylique halogéné ou un acide succinique halogéné, leurs sels alcalins ou alcalinoterreux ou leurs sels de métaux alcalin et lourd ou leur esters, le rapport moléculaire étant compris entre 1:1 et 1:3, ce chauffage étant effectué en milieu aqueux à une température comprise entre 50 et 160°C et avec une valeur de pH comprise entre 4 et 12 et se prolongeant jusqu'à ce que la transformation soit achevée.

2. Procédé suivant la revendication 1 caractérisé par le fait que l'on maintient la valeur du pH entre 7 et 9 au cours de la réaction.

3. Procédé suivant la revendication 1 caractérisé par le fait que l'on effectue la réaction à une température comprise entre 60 et 110°C.

4. A titre de produit industriel nouveau, un acide N-carboxyalcane-aminoalcane-diphosphonique ayant pour formule générale

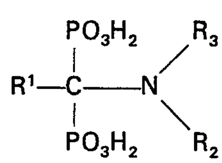

où les radicaux $R_1$ et $R_2$ sont définis comme indiqué dans la revendication 1 et $R_3$ est un radical alcoyle non ramifié avec substitution carboxylée dont la formule est $(CH_2)_mCOOH$ où m est compris entre 2 et 12, ou bien un radical alcoyl ramifié avec une substitution carboxylée ou encore un radical alcoyle avec substitution dicarboxylée, la caractéristique de cet acide consistant en ce qu'il est préparé suivant le procédé défini par l'une quelconque des revendications 1 à 3.

5. Combinaison suivant la revendication 4 caractérisée par le fait que $R_1$ forme avec $R_2$ un groupe alcoylène contenant 5 atomes de carbone et constitue avec le groupement

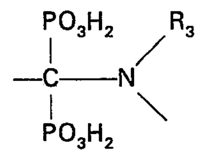

un noyau azacycloheptylique tandis que $R_3$ est un radical carboxyméthyle de telle sorte que cette combinaison constitue un acide N-carboxyméthane-azacycloheptane-2,2-diphosphonique.

6. Combinaison suivant la revendication 4 caractérisée par le fait que $R_1$ est un radical méthyle, $R_2$ un atome d'hydrogène et $R_3$ un radical carboxypentylique de telle sorte que cette combinaison constitue un acide N-carboxypentane-1-aminoéthane-1,1-diphosphonique.

7. Combinaison suivant la revendication 4 caractérisée par le fait que $R_1$ est un atome d'hydrogène, $R_2$ un atome d'hydrogène et $R_3$ un radical 2-carboxy-2,2-diméthyléthyle de telle sorte que cette combinaison constitue un acide N-(2-carboxy-2,2-diméthyléthane)-aminométhane-diphosphonique.

8. Combinaison suivant la revendication 4 caractérisée par le fait que $R_1$ est un radical éthyle, $R_2$ un atome d'hydrogène et $R_3$ un groupe ayant pour formule

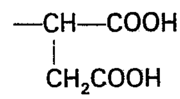

de telle sorte que cette combinaison est un acide N-(1,1-diphosphono-prop-1-yl)dl-aminosuccinique.

9. Combinaison suivant la revendication 4 caractérisée par le fait que $R_1$ est un atome d'hydrogène et que $R_2$ et $R_3$ sont des groupes carboxydécyliques de telle sorte que la combinaison constitue un acide N,N-bis-(10-carboxydécane)aminoéthane-diphosphonique.

10. Combinaison suivant la revendication 4 caractérisée par le fait que $R_1$ est un groupe carboxyméthyle, $R_2$ est un atome d'hydrogène et $R_3$ un radical d'acide pentane carboxylé de telle sorte que la combinaison constitue un acide 2-carboxy-1,1-diphosphono-éthane-1-aminopentane carboxylé.

11. Combination suivant la revendication 4 caractérisée par le fait que $R_1$ est un radical undécyle, $R_2$ un atome d'hydrogène et $R_3$ un groupe 2-carboxy-2,2-diméthyléthyle de telle sorte que cette combinaison constitue un acide N-(2-carboxy-2,2-diméthyléthane)-1-aminododécane-1,1-diphosphonique.

12. Combinaison suivant la revendication 4 caractérisée par le fait que $R_1$ est un radical hydroxyéthyle, $R_2$ un groupe carboxyéthyle et $R_3$ également un groupe carboxyéthyle de telle sorte que cette combinaison constitue un acide N,N-bis-(carboxyéthane)-3-hydroxy-1-aminopropane-1,1-diphosphonique.

13. Application des acides suivant la revendication 4 au traitement des ensembles aqueux en proportions stoéchiométriques et sousstoéchiométriques.